(19) Europäisches Patentamt
European Patent Office
Office européen des brevets

(11) **EP 4 276 683 A1**

(12) **EUROPEAN PATENT APPLICATION**
published in accordance with Art. 153(4) EPC

(43) Date of publication:
**15.11.2023 Bulletin 2023/46**

(21) Application number: **22758680.7**

(22) Date of filing: **04.01.2022**

(51) International Patent Classification (IPC):
**G06K 9/00** (2022.01)          **G06K 9/62** (2022.01)

(52) Cooperative Patent Classification (CPC):
**G06F 18/00; G06V 10/764; G06V 20/40;
G06V 20/52; H04N 23/60; H04W 4/40**

(86) International application number:
**PCT/CN2022/070160**

(87) International publication number:
**WO 2022/179314 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.02.2021 CN 202110221889**

(71) Applicant: **Huawei Technologies Co., Ltd.
Shenzhen, Guangdong 518129 (CN)**

(72) Inventor: **ZHANG, Lingmin
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **OBJECT DETECTION METHOD AND ELECTRONIC DEVICE**

(57)    This application relates to an object detection method and an electronic device, to reduce a probability of missing selection and incorrect selection in object detection. The method includes: An electronic device obtains an image, recognizes an object included in the image, and obtains one or more candidate boxes of the object and candidate box information corresponding to each candidate box, where the candidate box information includes a position of the object in the image, a detection probability of the object, and a first object category of the object. The electronic device further receives a first message of a mobile device, where the first message includes position information of the object and a second object category of the object; determines, from the one or more candidate boxes based on the position information of the object and the position of the object in the image, a first candidate box corresponding to the first message; adjusts a parameter corresponding to the at least one first candidate box; obtains, from the first candidate box, a second candidate box with a detection probability greater than or equal to a preset detection probability threshold; and obtains a detection box of the object from the one or more second candidate boxes by using an NMS algorithm.

S601: Periodically capture an image at a first angle based on a period with first duration, and each time after an image is captured, recognize the image by using an object detection algorithm, to obtain one or more candidate boxes of each object in the image and candidate box information corresponding to each candidate box

S602: Receive a first message from a mobile device of the object, where the first message includes position information, category information, and the like of the object

S603: Determine, based on whether a difference between a receiving time of the first message and a capturing time of the image falls within preset duration, a first image corresponding to the first message

S604: Obtain a first position of the object in the first image through coordinate conversion based on the position information of the object in the first message, position information of the electronic device, and the first angle

S605: Determine, based on whether a difference between the first position and the position that is of the object in the image and that is in the candidate box information falls within a preset threshold, at least one first candidate box that is in the image and that is related to the object

S606: Adjust a parameter corresponding to the at least one first candidate box, where the parameter is related to the candidate box information

S607: Obtain one detection box of the object based on a detection probability and a specific algorithm, where candidate box information of the detection box is finally obtained information about the object

FIG. 6

EP 4 276 683 A1

## Description

This application claims priority to Chinese Patent Application No. 202110221889.6, filed with the China National Intellectual Property Administration on February 27, 2021 and entitled "OBJECT DETECTION METHOD AND ELECTRONIC DEVICE", which is incorporated herein by reference in its entirety.

## TECHNICAL FIELD

This application relates to the field of artificial intelligence, and in particular, to an object detection method and an electronic device.

## BACKGROUND

With the development of artificial intelligence (artificial intelligence, AI) technologies, AI image recognition is more widely used. For example, a camera on a road captures an image, and detects an object in the image by using a deep learning algorithm, to obtain information such as a category and a position of the object.

Due to limited conditions, for example, the weather affects visibility, an object in an image is blocked, and a shooting angle of a camera is deviated, problems such as missing detection and incorrect detection often occur in object detection. As a result, a user requirement cannot be met.

## SUMMARY

To resolve the foregoing technical problem, this application provides an object detection method and an electronic device, to improve object detection precision, reduce a probability of missing detection and incorrect detection, and meet a user requirement.

According to a first aspect, an embodiment of this application provides an object detection method, applied to an electronic device including a camera device. The electronic device is fixedly disposed, the electronic device communicates with a mobile device in a wireless manner, a distance between the mobile device and the electronic device falls within a specific range, the mobile device is located on an object, and the method includes: The electronic device obtains an image through photo taking or video shooting at a first angle by using the camera device, where the image includes at least one object; recognizes the object included in the image, and obtains one or more candidate boxes of each object in the object and one piece of candidate box information corresponding to each candidate box, where the candidate box information includes a position of the object in the image, a detection probability of the object, a first object category of the object, and a maximum intersection over union max IoU between the candidate box and another candidate box that overlaps the candidate box; receives a first message from the mobile device within preset duration before or after the image is obtained, where the first message includes position information of the object and a second object category of the object; determines, from the one or more candidate boxes based on the position information of the object, position information of the electronic device, the first angle, and the position of the object in the image, at least one first candidate box corresponding to the first message; obtains, from the at least one first candidate box, one or more second candidate boxes with a detection probability greater than or equal to a preset detection probability threshold; and obtains one detection box of the object from the one or more second candidate boxes by using a maximum suppression NMS algorithm, where candidate box information corresponding to the detection box is information that discloses the object, and the first object category and the second object category are based on a same category classification standard. For example, the first object category is a vehicle category, including a car, an off-road vehicle, a bus, a truck, a school bus, a fire engine, an ambulance, a police car, and the like. The second object category is also a vehicle category, including a car, an off-road vehicle, a bus, a truck, a school bus, a fire engine, an ambulance, a police car, and the like. Alternatively, the first object category is a person category, including an infant, a child, an adult, an elderly person, and the like. The second object category is also a person category, including an infant, a child, an adult, an elderly person, and the like.

When the object is not blocked, the candidate box of the object includes only a complete contour of the object.

In this method, information such as a position and a category of an object is obtained by using a V2X technology (receiving a first message). A detection box is determined from a plurality of candidate boxes based on the obtained information such as the position and the category of the object and information such as a position and a category that is of the object and that is obtained through recognition by using an object detection algorithm. Compared with a method for recognizing an object by using the object detection algorithm alone, precision of the detection box determined from the candidate boxes is improved, and a probability of missing detection and incorrect detection in object detection is reduced.

According to the first aspect, the object includes at least one of the following: a vehicle and a person, and the position information includes position coordinates.

According to a second aspect, an embodiment of this application provides an object detection method, applied to an electronic device including a camera device. The electronic device is fixedly disposed, the electronic device communicates with a mobile device in a wireless manner, a distance between the mobile device and the electronic device falls within a specific range, the mobile device is located on an object, and the method includes: The electronic device obtains an image through photo taking or video shooting at a first angle by using the camera device, where the image includes at least one object; recognizes the object included in the image, and obtains one or more candidate boxes of each object in the object and one piece of candidate box information corresponding to each candidate box, where the candidate box information includes a position of the object in the image, a detection probability of the object, a first object category of the object, and a maximum intersection over union max IoU between the candidate box and another candidate box that overlaps the candidate box; receives a first message from the mobile device within preset duration before or after the image is obtained, where the first message includes position information of the object and a second object category of the object; determines, from the one or more candidate boxes based on the position information of the object, position information of the electronic device, the first angle, and the position of the object in the image, at least one first candidate box corresponding to the first message; adjusts a parameter corresponding to the at least one first candidate box, where the parameter is related to the candidate box information; obtains, from the at least one first candidate box and a candidate box other than the first candidate box, one or more second candidate boxes with a detection probability greater than or equal to a preset detection probability threshold; and obtains one detection box of the object from the one or more second candidate boxes by using a maximum suppression NMS algorithm, where candidate box information corresponding to the detection box is information that discloses the object, and the first object category and the second object category are based on a same category classification standard. For example, the first object category is a vehicle category, including a car, an off-road vehicle, a bus, a truck, a school bus, a fire engine, an ambulance, a police car, and the like. The second object category is also a vehicle category, including a car, an off-road vehicle, a bus, a truck, a school bus, a fire engine, an ambulance, a police car, and the like. Alternatively, the first object category is a person category, including an infant, a child, an adult, an elderly person, and the like. The second object category is also a person category, including an infant, a child, an adult, an elderly person, and the like.

When the object is not blocked, the candidate box of the object includes only a complete contour of the object.

In this method, information such as a position and a category of an object is obtained by using a V2X technology (receiving a first message). A related parameter in a process of determining a detection box from a plurality of candidate boxes is adjusted based on the obtained information such as the position and the category of the object, so that information about the detection box determined from the candidate boxes is more accurate and has higher precision, and a probability of missing detection and incorrect detection in object detection is reduced.

According to the second aspect, the object includes at least one of the following: a vehicle and a person, and the position information includes position coordinates.

According to any one of the second aspect or the foregoing implementation of the second aspect, the adjusting a parameter corresponding to the at least one first candidate box includes: increasing a value of a detection probability corresponding to each first candidate box; and the obtaining one or more second candidate boxes with a detection probability greater than or equal to a preset detection probability threshold includes: deleting or excluding a first candidate box with a detection probability less than the preset detection probability threshold, to obtain the one or more second candidate boxes.

In this method, a candidate box with a detection probability less than the detection probability threshold is deleted, that is, it is determined that the candidate box with a detection probability less than the detection probability threshold is not a detection box. When a distance between a position of the object in the first message and a position of the object in the candidate box information of the first candidate box is less than a preset distance threshold $d_{threshold}$, it indicates that a probability that an object corresponding to the first candidate box and an object sending the first message are a same object is high, and a value of a detection probability in the candidate box information of the first candidate box is increased, so that a probability that the first candidate box is determined as a detection box is increased, and a probability of missing detection is reduced.

According to any one of the second aspect or the foregoing implementations of the second aspect, the increasing a value of a detection probability corresponding to each first candidate box includes: enabling an increased detection probability to be equal to $score' \times (1 - \varphi(d)) + score_{oral} \times \varphi(d)$, where $\varphi(d) = 2d/(d_{threshold} + d)$, d represents a distance between the position of the object in the image and a first position that is in the image and into which the position information in the first message is converted through coordinate conversion, or d represents a distance between the position information in the first message and a first position that is in a local geodetic coordinate system and into which the position of the object in the image is converted through coordinate conversion, $d_{threshold}$ represents a preset distance threshold, $score_{oral}$ represents a value of a detection probability corresponding to one first candidate box, $score'$ represents a specified detection probability adjustment threshold, and detection probability threshold$<score' < 1$.

According to any one of the second aspect or the foregoing implementations of the second aspect, the adjusting a parameter corresponding to the at least one first candidate box includes: increasing an intersection over union threshold corresponding to the first candidate box; and the obtaining one detection box of the object from the one or more second candidate boxes by using a maximum suppression NMS algorithm includes: if a max IoU in candidate box information of one second candidate box is less than the increased intersection over union threshold corresponding to the first candidate box, by using the NMS algorithm, stopping deleting or excluding the second candidate box from the candidate box, and determining the second candidate box as the detection box of the object.

In this method, if the distance between the position of the object in the first message and the position that is of the object in the image and that is in the candidate box information of the first candidate box is less than the preset distance threshold $d_{threshold}$, it indicates that the probability that the object corresponding to the candidate box and the object sending the first message are a same object is high, and the intersection over union threshold $IoU_{th}$ corresponding to the first candidate box in a process of determining the detection box from a plurality of candidate boxes by using the NMS algorithm is increased, so that a probability that the first candidate box is deleted is reduced, that is, a probability that the first candidate box is determined as a detection box is increased, and a probability of missing detection is reduced.

In an implementation, the increasing an intersection over union threshold corresponding to the first candidate box includes: enabling an increased intersection over union threshold corresponding to the first candidate box to be equal to $IoU'_{th} \times \left(1 - \varphi(d)\right) + IoU^{oral}_{th} \times \varphi(d)$, where $\varphi(d) = 2d/(d_{threshold} + d)$, d represents a distance between the position of the object in the image and a first position that is in the image and into which the position information in the first message is converted through coordinate conversion, or d represents a distance between the position information in the first message and a first position that is in a local geodetic coordinate system and into which the position of the object in the image is converted through coordinate conversion, $d_{threshold}$ represents a preset distance threshold, $IoU^{oral}_{th}$ represents a preset intersection over union threshold in the NMS algorithm, $IoU'_{th}$ represents a specified intersection over union threshold adjustment threshold, and $IoU^{oral}_{th} < IoU'_{th} < 1$.

According to any one of the second aspect or the foregoing implementations of the second aspect, the method further includes: determining the second object category of the object in the first message as an object category of the detection box if the second object category of the object in the first message is inconsistent with the first object category of the object in the candidate box information of the first candidate box. That is, the object category of the detection box is determined based on an object category in a V2X message, so that a probability of incorrect detection is reduced.

The determining the second object category of the object in the first message as an object category of the detection box if the second object category of the object in the first message is inconsistent with the first object category of the object in the candidate box information of the first candidate box includes: enabling an object category of the detection box to be equal to $(1 - \varphi(d)) > \varphi(d)? \; class_v:class_{oral}$, where $\varphi(d) = 2d/(d_{threshold} + d)$, d represents a distance between the position of the object in the image and a first position that is in the image and into which the position information in the first message is converted through coordinate conversion, or d represents a distance between the position information in the first message and a first position that is in a local geodetic coordinate system and into which the position of the object in the image is converted through coordinate conversion, $d_{threshold}$ represents a preset distance threshold, *class,* represents the second object category of the object in the first message, and $class_{oral}$ represents the first object category of the object in the candidate box information of the first candidate box.

According to any one of the second aspect or the foregoing implementations of the second aspect, the determining, from the one or more candidate boxes based on the position information of the object, position information of the electronic device, the first angle, and the position of the object in the image, at least one first candidate box corresponding to the first message includes: traversing all candidate box information corresponding to the object, comparing the preset distance threshold with D obtained through conversion based on the candidate box information, and determining, as the first candidate box, a candidate box with D less than the preset distance threshold, where D represents a distance between the position of the object in the image and a first position that is in the image and into which the position information of the object is converted through coordinate conversion based on the position information of the electronic device and the first angle.

In this method, if the distance between the position of the object in the first message and the position that is of the object in the image and that is in the candidate box information of the candidate box is less than the preset distance threshold $d_{threshold}$, it indicates that a probability that the object corresponding to the candidate box and the object sending the first message are a same object is high, and the candidate box is determined as a first candidate box, and a parameter corresponding to the first candidate box is adjusted.

According to any one of the second aspect or the foregoing implementations of the second aspect, the recognizing the object included in the image includes: recognizing, by using a YOLO algorithm or a Fast_RCNN algorithm, the object included in the image.

According to a third aspect, an embodiment of this application provides an electronic device. The electronic device includes a processor, a memory, and a computer program, where the computer program is stored in the memory, and when the computer program is executed by the processor, the electronic device is enabled to perform the method according to any one of the first aspect or the implementations of the first aspect, or the method according to any one of the second aspect or the implementations of the second aspect.

For technical effects corresponding to any one of the third aspect or the implementations of the third aspect, refer to technical effects corresponding to any one of the first aspect or the implementations of the first aspect, or technical effects corresponding to any one of the second aspect or the implementations of the second aspect. Details are not described herein again.

According to a fourth aspect, a computer-readable storage medium is provided. The computer-readable storage medium includes a computer program. When the computer program runs on an electronic device, the electronic device is enabled to perform the method according to any one of the first aspect or the implementations of the first aspect, or the method according to any one of the second aspect or the implementations of the second aspect.

For technical effects corresponding to any one of the fourth aspect or the implementations of the fourth aspect, refer to technical effects corresponding to any one of the first aspect or the implementations of the first aspect, or technical effects corresponding to any one of the second aspect or the implementations of the second aspect. Details are not described herein again.

According to a fifth aspect, a computer program product is provided. When the computer program product runs on a computer, the computer is enabled to perform the method according to any one of the first aspect or the implementations of the first aspect, or the method according to any one of the second aspect or the implementations of the second aspect.

For technical effects corresponding to any one of the fifth aspect or the implementations of the fifth aspect, refer to technical effects corresponding to any one of the first aspect or the implementations of the first aspect, or technical effects corresponding to any one of the second aspect or the implementations of the second aspect. Details are not described herein again.

**BRIEF DESCRIPTION OF DRAWINGS**

FIG. 1 is a schematic diagram of an AI image recognition scenario;

FIG. 2 is a schematic diagram of an object detection result;

FIG. 3 is a schematic diagram of a deployment example of an RSU and an OBU;

FIG. 4 is an example diagram of a scenario to which an object detection method is applicable according to an embodiment of this application;

FIG. 5 is a schematic diagram of an architecture of an electronic device to which an object detection method is applicable according to an embodiment of this application;

FIG. 6 is a schematic flowchart of an object detection method according to an embodiment of this application.

FIG. 7 is an example diagram of a scenario of an object detection method according to an embodiment of this application;

FIG. 8 is a schematic diagram of a conversion relationship between a local geodetic coordinate system and a world coordinate system;

FIG. 9 is a schematic diagram of a conversion relationship between a world coordinate system and a pixel coordinate system; and

FIG. 10 is a schematic diagram of a structure of an object detection electronic device according to an embodiment of this application.

**DESCRIPTION OF EMBODIMENTS**

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include forms such as "one or more", unless otherwise specified in the context clearly. It should be further understood that in the following embodiments of this application, "at least one" and "one or more" mean one or at least two (including two). The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

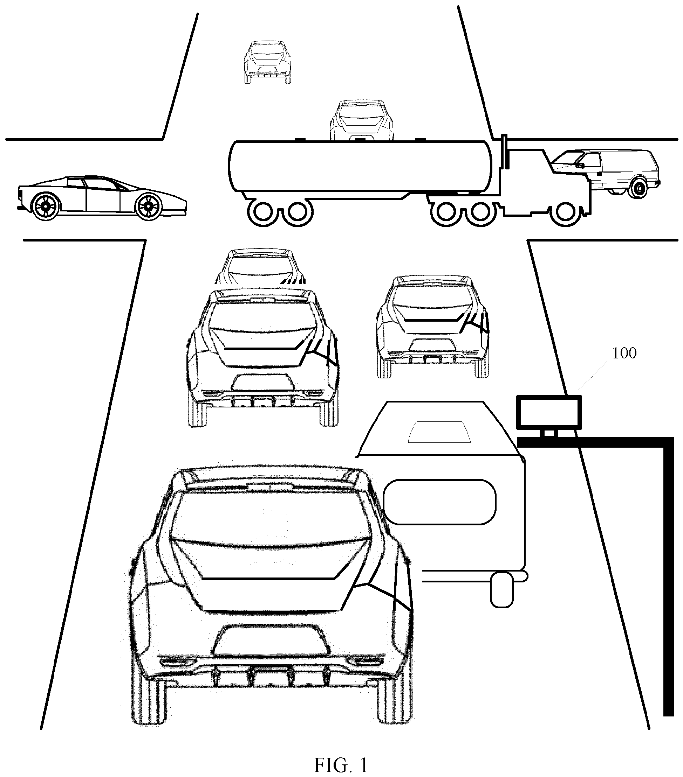

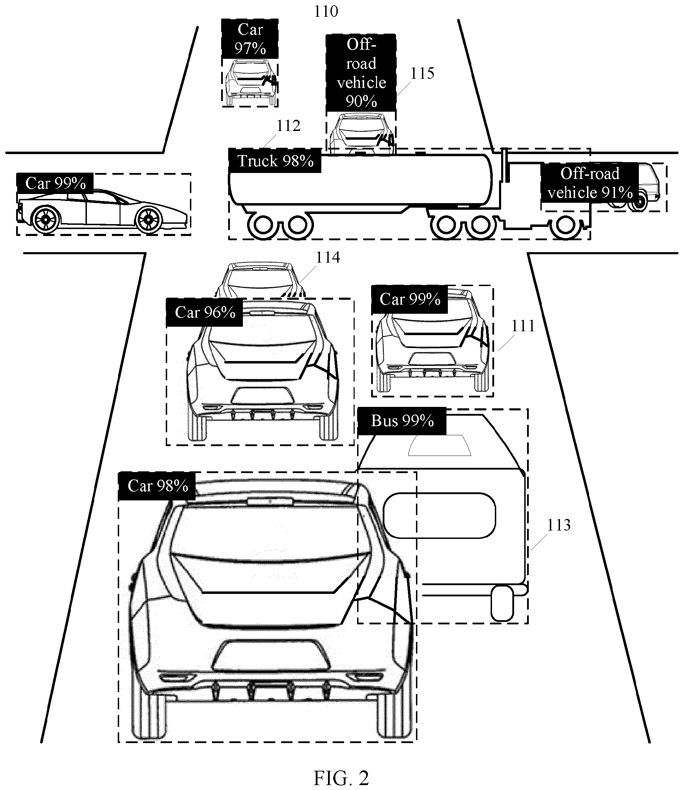

With the development of AI technologies, AI image recognition is increasingly widely used. FIG. 1 shows an AI image recognition scenario. An electronic device 100 is mounted on a bracket on the roadside. The electronic device 100 includes an AI camera, or the electronic device 100 is an AI camera. The electronic device 100 captures an intersection image, and performs image recognition on the captured image. For example, the electronic device 100 detects an object in the image by using a deep learning algorithm, and may obtain information such as a category and a position of the object. FIG. 2 shows an example of an object detection result. The electronic device 100 performs object detection on a captured image 110 by using an object detection algorithm, where a detected object is a vehicle, and obtains information such as a position, a category, and a detection probability (namely, a probability that the object is of the category) of the vehicle in the image. For example, the electronic device 100 learns that a vehicle category of a vehicle 111 in the image 110 is a car, and a detection probability thereof is 99%; learns that a vehicle category of a vehicle 112 in the image 110 is a truck, and a detection probability thereof is 98%; and learns that a vehicle category of a vehicle 113 in the image 110 is a bus, and a detection probability thereof is 99%.

Due to limited conditions, for example, the weather affects visibility, an object in an image is blocked, and a shooting angle of a camera is deviated, problems such as missing detection and incorrect detection often occur in object detection. For example, a vehicle 114 in FIG. 2 is not detected, that is, the vehicle 114 is missed. A vehicle category of a vehicle 115 in FIG. 2 is a car, but is detected as an off-road vehicle, that is, the vehicle 115 is incorrectly detected.

Embodiments of this application provide an object detection method. An electronic device supports a vehicular wireless communication technology (vehicle to everything, V2X), obtains vehicle information by using V2X, and during object detection, performs determining based on the vehicle information obtained by using V2X, to reduce incorrect detection and missing detection, and improve object detection precision.

V2X is a next-generation information communication technology that connects a vehicle to everything. V represents a vehicle, and X represents any object that exchanges information with the vehicle. For example, X may include a vehicle, a person, a roadside infrastructure, a network, and the like. An information exchange mode of V2X includes information exchange of vehicle to vehicle (vehicle to vehicle, V2V), vehicle to roadside infrastructure (vehicle to infrastructure, V2I), vehicle to pedestrian (vehicle to pedestrian, V2P), and vehicle to network (vehicle to network, V2N).

V2X based on a cellular (Cellular) technology is C-V2X. C-V2X is a vehicular wireless communication technology evolved based on cellular network communication technologies such as 3G/4G/5G. C-V2X includes two types of communication interfaces: One type is a short-distance direct communication interface (PC5) between terminals such as a vehicle, a person, and a roadside infrastructure, and the other type is a communication interface (Uu) between a network and terminals such as a vehicle, a person, and a roadside infrastructure, and is used to implement long-distance and large-range reliable communication.

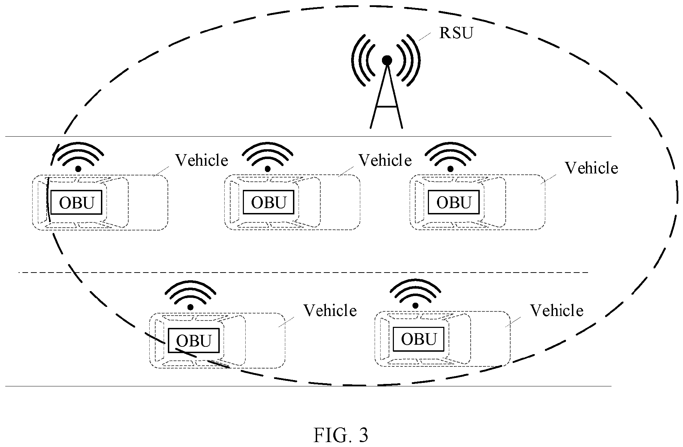

Terminals in V2X include a roadside unit (roadside unit, RSU) and an onboard unit (onboard unit, OBU). For example, FIG. 3 shows a deployment example of an RSU and an OBU. The RSU is a static entity that supports V2X application, and is deployed on the roadside, for example, a gantry on the roadside. The RSU can exchange data with another entity (for example, an RSU or an OBU) that supports V2X application. The OBU is a dynamic entity that supports V2X application, is usually mounted in a vehicle, and can exchange data with another entity (for example, an RSU or an OBU) that supports V2X application.

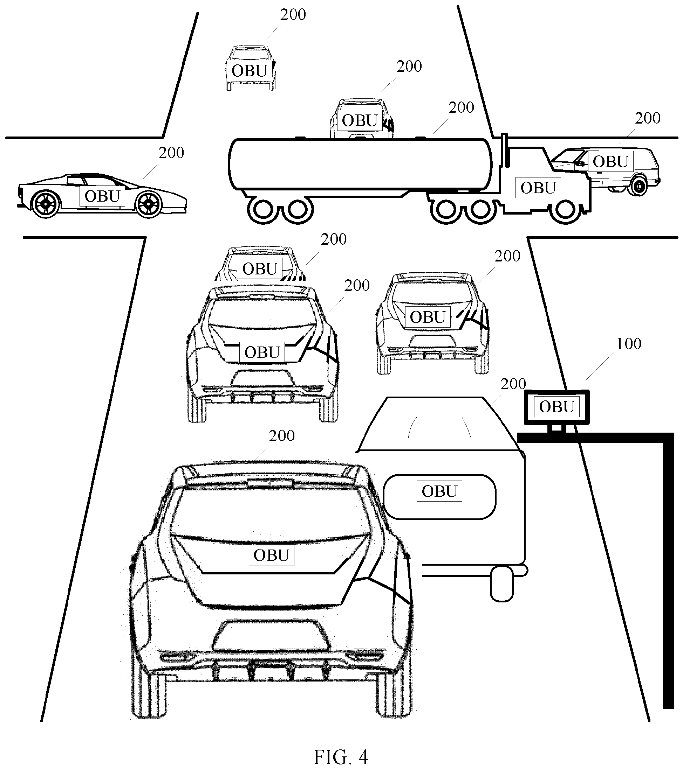

In an implementation, the RSU may be the electronic device 100 in FIG. 1 or FIG. 4.

In another implementation, the electronic device 100 in FIG. 1 or FIG. 4 may include an RSU.

In an implementation, the OBU may be referred to as a mobile device. Further, if the OBU is disposed in a vehicle, the OBU may be referred to as a vehicle-mounted device.

In another implementation, a mobile device may include an OBU. Further, if the mobile device is disposed in a vehicle, the mobile device may be referred to as a vehicle-mounted device.

It should be noted that the foregoing implementations may be freely combined without a conflict.

The object detection method provided in embodiments of this application may be applied to a scenario shown in FIG. 4. An OBU is separately mounted in an electronic device 100 and a vehicle 200. The electronic device 100 and each vehicle 200 may communicate with each other by using V2X. For example, the OBU of the vehicle 200 periodically broadcasts a basic safety message (basic safety message, BSM), and the BSM includes basic information of the vehicle, for example, a vehicle driving speed, heading, a position, an acceleration, a vehicle category, a predicted path, a historical path, and a vehicle event. A communication distance between the OBUs is a first distance (for example, 500 meters). The electronic device 100 may obtain, by using V2X, a basic safety message broadcast by a vehicle 200 within the first distance around the electronic device 100.

In some other examples, the electronic device 100 supports an RSU function, and a communication distance between the OBU and the RSU is a second distance (for example, 1000 meters). The electronic device 100 may obtain, by using V2X, a basic safety message broadcast by a vehicle 200 within the second distance around the electronic device 100. In the following embodiments of this application, an example in which an OBU is mounted in the electronic device 100 is used for description. It may be understood that the object detection method provided in embodiments of this application is also applicable to a case in which the electronic device supports the RSU function.

The electronic device 100 captures a road image, and performs object detection on the road image by using the object detection algorithm. For example, the object detection algorithm includes a YOLO (you only look once) algorithm, Fast_RCNN, and the like. During object detection, one or more candidate recognition regions (region of interest, RoI) of each detected object are first obtained through calculation, and are referred to as candidate boxes (RoIs). Then, one ROI is obtained from the one or more candidate boxes through screening, that is, a detection box of the detected object is obtained. The detected object may include a vehicle, a pedestrian, a signpost, and the like.

In the object detection method provided in embodiments of this application, the electronic device 100 further obtains a broadcast message of the vehicle 200 within the first distance around the electronic device 100 by using V2X, and obtains one RoI from a plurality of candidate boxes through screening based on the obtained broadcast message of the vehicle around the electronic device, to improve detection precision of object detection.

Optionally, the electronic device 100 may be an AI camera, or may be an electronic device including an AI camera, or may be an electronic device including a camera or a camera (different from an AI camera).

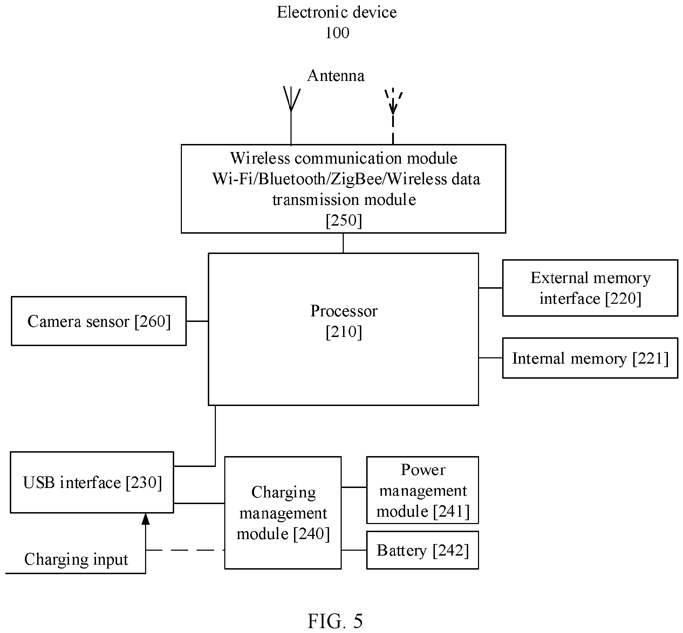

For example, FIG. 5 is a schematic diagram of a structure of an electronic device. The electronic device 100 may include a processor 210, an external memory interface 220, an internal memory 221, a universal serial bus (universal serial bus, USB) interface 230, a charging management module 240, a power management module 241, a battery 242, an antenna, a wireless communication module 250, a camera sensor 260, and the like.

It may be understood that, the structure illustrated in this embodiment of this application constitutes no specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 100 may also include one or more processors 210. The controller may generate an operation control signal based on an instruction operation code and a time sequence signal, to complete control of instruction reading and instruction execution.

In some embodiments, the processor 210 may include one or more interfaces. The interface may include an inter-integrated circuit (inter-integrated circuit, I2C) interface, an inter-integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 230 is an interface that conforms to a USB standard specification, and may be specifically a mini USB interface, a micro USB interface, a USB Type C interface, or the like. The USB interface 230 may be configured to connect to a charger to charge the electronic device 100, or may be configured to transmit data between the electronic device 100 and a peripheral device.

It may be understood that, an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 240 is configured to receive charging input from a charger. The charger may be a wireless charger or a wired charger. In some embodiments of wired charging, the charging management module 240 may receive charging input of the wired charger through the USB interface 230. In some embodiments of wireless charging, the charging management module 240 may receive wireless charging input by using a wireless charging coil of the electronic device 100. When charging the battery 242, the charging management module 240 may further supply power to the electronic device by using the power management module 241.

The power management module 241 is configured to connect to the battery 242, the charging management module 240, and the processor 210. The power management module 241 receives input of the battery 242 and/or the charging management module 240, and supplies power to the processor 210, the internal memory 221, the external memory interface 220, the wireless communication module 250, and the like. The power management module 241 may be further configured to monitor parameters such as a battery capacity, a battery cycle count, and a battery state of health (current leakage or impedance). In some other embodiments, the power management module 241 may be disposed in the processor 210. In some other embodiments, the power management module 241 and the charging management module 240 may alternatively be disposed in a same component.

A wireless communication function of the electronic device 100 may be implemented by using the antenna, the wireless communication module 250, and the like.

The wireless communication module 250 may provide a solution for wireless communication including Wi-Fi, Bluetooth (Bluetooth, BT), a wireless data transmission module (for example, 433 MHz, 868 MHz, or 915 MHz) applied to the electronic device 100. The wireless communication module 250 may be one or more components that integrate at least one communication processing module. The wireless communication module 250 receives an electromagnetic wave by using the antenna, performs filtering and frequency modulation processing on the electromagnetic wave signal, and sends a processed signal to the processor 210. The wireless communication module 250 may further receive a to-be-sent signal from the processor 210, perform frequency modulation and amplification on the signal, and convert the signal into an electromagnetic wave for radiation by using the antenna.

In this embodiment of this application, the electronic device 100 may receive a broadcast message (a basic security message) by using the wireless communication module.

The external memory interface 220 may be configured to connect to an external storage card, for example, a micro SD card, to expand a storage capability of the electronic device 100. The external storage card communicates with the processor 210 through the external memory interface 220, to implement a data storage function, for example, to store files such as music or a video into the external storage card.

The internal memory 221 may be configured to store one or more computer programs, and the one or more computer programs include instructions. The processor 210 may run the instructions stored in the internal memory 221, so that the electronic device 100 performs the object detection method provided in some embodiments of this application, various applications, data processing, and the like. The internal memory 221 may include a code storage area and a data storage area. The code storage area may store an operating system. The data storage area may store data created during use of the electronic device 100 and the like. In addition, the internal memory 221 may include a high-speed random access memory, and may further include a nonvolatile memory, for example, one or more magnetic disk storage components, a flash memory component, or a universal flash storage (universal flash storage, LTFS). In some embodiments, the processor 210 may run the instructions stored in the internal memory 221 and/or the instructions stored in the memory disposed in the processor 210, to enable the electronic device 100 to perform the object detection method provided in embodiments of this application, other applications, and data processing.

The camera sensor 260 is configured to capture a static image or a video. An optical image of an object is generated by using a lens, and is projected to the camera sensor 260. The camera sensor 260 may be a charge-coupled device (charge coupled device, CCD) or a complementary metal-oxide-semiconductor (complementary metal-oxide-semiconductor, CMOS) phototransistor. The camera sensor 260 converts an optical signal into an electrical signal, and then transmits the electrical signal to the processor 210 to convert the electrical signal into a digital image signal. The DSP in the processor 210 converts the digital image signal into an image signal in a standard format such as RGB or YUV For example, during photographing, a shutter is pressed, light is transmitted to the camera sensor 260 by using the lens, an optical signal is converted into an electrical signal, and the camera sensor 260 transmits the electrical signal to the processor 210 for processing, to convert the electrical signal into an image visible to a naked eye. The processor 210 may further perform algorithm optimization on noise, brightness, and complexion of the image, and may further optimize parameters such as exposure and a color temperature of a photographing scene.

In this embodiment of this application, the electronic device 100 captures a road image by using the camera sensor 260, and the road image captured by the camera sensor 260 is transferred to the processor 210. The processor 210 obtains one or more candidate boxes (RoIs) of each object in the road image through calculation by using an object detection algorithm such as YOLO or Fast_RCNN. The electronic device 100 further receives a broadcast message (a basic safety message) of a vehicle around the electronic device by using the wireless communication module 250. The processor 210 receives the basic security message of the vehicle around the electronic device, and obtains one RoI from a plurality of candidate boxes through screening based on the obtained basic security message of the vehicle around the electronic device, that is, obtains a detected object.

It should be noted that the system to which this embodiment of this application is applicable may include more electronic devices than those shown in FIG. 4. In some embodiments, the system further includes a server (for example, a cloud server). In an example, the electronic device captures a road image, and uploads the road image to the server. The electronic device receives a basic security message periodically broadcast by an OBU within a first distance of the electronic device, and forwards the obtained basic security message to the server. The server obtains one or more candidate boxes (RoIs) of each object in the road image through calculation by using an object detection algorithm such as YOLO or Fast_RCNN, and obtains one RoI from a plurality of candidate boxes through screening based on the obtained basic safety message of the vehicle, that is, obtains a detected object.

With reference to the accompanying drawings, the following uses the scenario shown in FIG. 4 as an example to describe in detail the object detection algorithm provided in embodiments of this application.

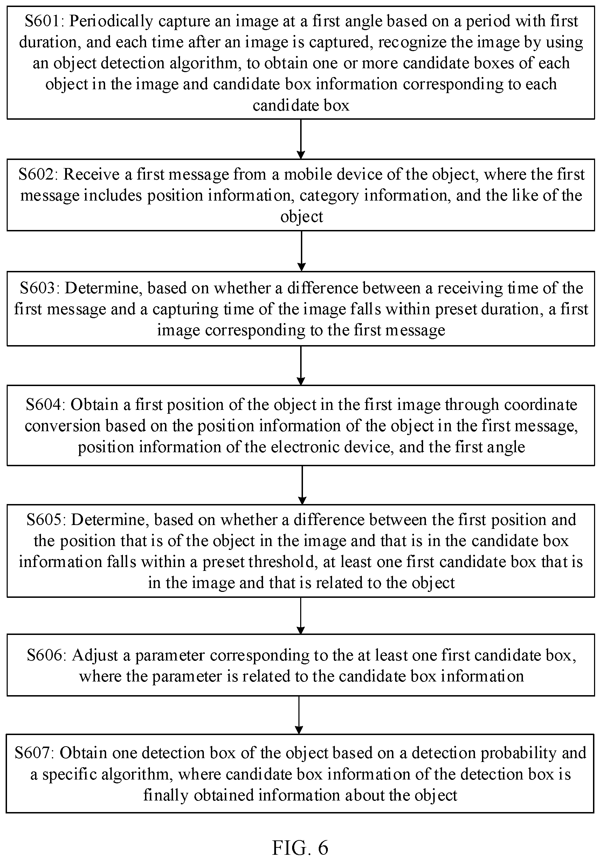

For example, FIG. 6 is a schematic flowchart of an object detection algorithm according to an embodiment of this application. The object detection algorithm provided in this embodiment of this application may include:

S601: Periodically capture an image at a first angle based on a period with first duration, and each time after an image is captured, recognize the image by using an object detection algorithm, to obtain one or more candidate boxes of each object in the image and candidate box information corresponding to each candidate box.

An electronic device uses a camera to periodically capture an image at the first angle based on the period with the first duration (such as 1s). Each time after an image is captured, the electronic device recognizes the image by using the object detection algorithm. For example, the object detection algorithm is YOLO, Fast_RCNN, or the like. A detected object on which object detection is performed is a vehicle.

The electronic device recognizes each captured image, to obtain one or more candidate boxes of each object in the image and candidate box information corresponding to each candidate box. The candidate box information includes a detection probability, an image position, an object category (for example, a vehicle category), a maximum intersection over union (max IoU) between the candidate box to another candidate box, and the like The detection probability is a probability that the detected object is of the object category (for example, the vehicle category), and is also referred to as a score (score). The image position is pixel coordinates of the candidate box in the image, for example, includes pixel coordinate values $(x_{min}, y_{min})$ of an upper left corner of the candidate box, pixel coordinate values $(x_{max}, y_{max})$ of a lower right corner of the candidate box, and pixel coordinate values $(x_p, y_p)$ of a center point of the candidate box. The vehicle category includes a car, an off-road vehicle, a bus, a truck, a school bus, a fire engine, an ambulance, a police car, and the like. The intersection over union (intersect over union, IoU) is a ratio of the intersection of two candidate boxes to the union of the two candidate boxes.

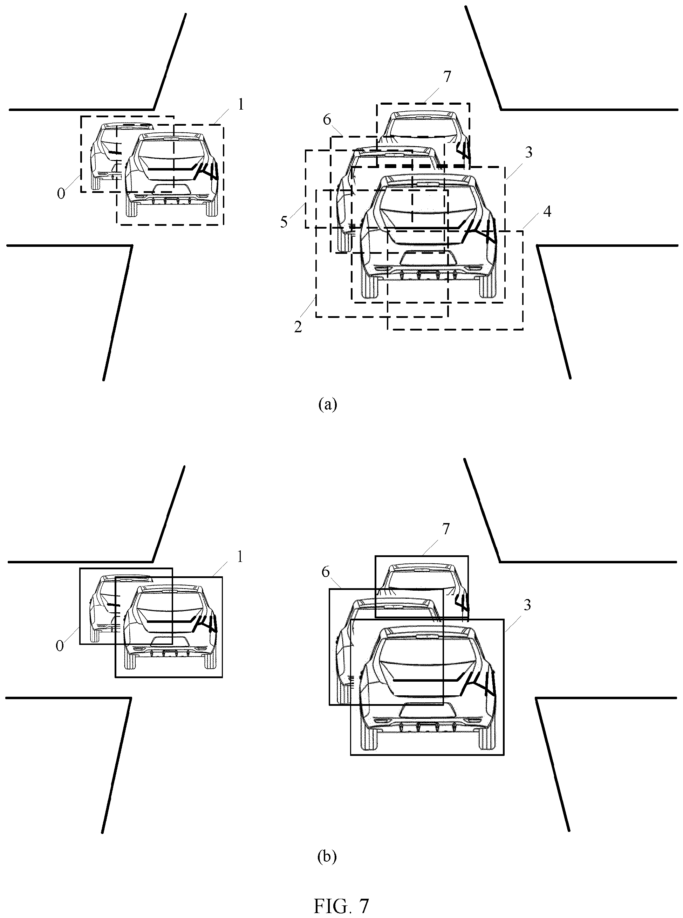

For example, FIG. 7 is an example diagram of a scenario of an object detection method according to an embodiment of this application.

As shown in (a) in FIG. 7, object detection is performed on a first image to obtain a candidate box 0, a candidate box 1, a candidate box 2, a candidate box 3, a candidate box 4, a candidate box 5, a candidate box 6, and a candidate box 7. Information such as pixel coordinate values $(x_{min}, y_{min})$ of upper left corners, pixel coordinate values $(x_{max}, y_{max})$ of lower right corners, pixel coordinate values $(x_p, y_p)$ of center points of the candidate boxes, detection probabilities (score), and maximum intersection over unions (max IoU) of the candidate box 0 to the candidate box 7 are shown in Table 1.

**Table 1**

| Sequence number | $x_{min}$ | $y_{min}$ | $x_{max}$ | $y_{max}$ | $x_p$ | $y_p$ | Score | Max IoU |
|---|---|---|---|---|---|---|---|---|
| 0 | 26 | 1 | 71 | 29 | 13.5 | 51 | 0.87 | 0.542 |
| 1 | 34 | 3 | 83 | 35 | 18.5 | 59 | 0.91 | 0.542 |
| 2 | 356 | 38 | 417 | 80 | 197 | 248.5 | 0.52 | 0.392 |
| 3 | 377 | 30 | 435 | 74 | 203.5 | 254.5 | 0.95 | 0.392 |
| 4 | 386 | 47 | 446 | 89 | 216.5 | 267.5 | 0.63 | 0.353 |
| 5 | 354 | 19 | 398 | 49 | 186.5 | 223.5 | 0.86 | 0.501 |
| 6 | 365 | 17 | 412 | 52 | 191 | 232 | 0.98 | 0.501 |
| 7 | 380 | 4 | 416 | 30 | 192 | 223 | 0.76 | 0.192 |

S602: Receive a first message from a mobile device of the object, where the first message includes position information, category information, and the like of the object.

A vehicle is used as the detected object, and an OBU is used as the mobile device. The OBU in the vehicle periodically sends a first message based on second duration (for example, 100 ms), where the first message includes information such as a vehicle identifier, a vehicle position (a latitude, a longitude, and an altitude), a vehicle category (including a car, an off-road vehicle, a bus, a truck, a school bus, a fire engine, an ambulance, a police vehicle, and the like), and a message sending time. For example, the first message is a BSM message. For example, the BSM message includes information shown in Table 2.

Table 2

| BSM message | Description |
|---|---|
| vehicle ID | Vehicle identifier |
| DSecond | Coordinated universal time (UTC time) |
| Vehicle Size | Vehicle size (including a length, a width, and a height) |
| AccelerationSet4Way | Accelerations of the vehicle in four directions |
| Heading | Heading angle of the vehicle |
| Speed | Current vehicle driving speed |
| VehicleClassification | Vehicle category |
| Position3D | Vehicle position (a latitude, a longitude, and an altitude) |
| ... | ... |

The electronic device receives first messages periodically sent by vehicles around the electronic device separately based on the second duration, and stores the received first messages.

S603: Determine, based on whether a difference between a receiving time of the first message and a capturing time of the image falls within preset duration, a first image corresponding to the first message.

In an implementation, the electronic device determines that the capturing time point of the image is a first moment, and determines, as the first image corresponding to the first message, a first message whose message sending time is within second duration before or after the first moment.

For example, the first image is an image at 18:20:01 in the image captured by the camera. A period for sending the first message by the vehicle is 100 milliseconds (that is, the second duration is 100 milliseconds). The camera determines, as the first message corresponding to the first image, a first message whose sending time is between (18:20:01-100 milliseconds) and 18:20:01.

Optionally, in some examples, if the first messages stored in the electronic device include a plurality of first messages of a same vehicle, the last first message in the plurality of first messages of the same vehicle is retained.

S604: Obtain a first position of the object in the first image through coordinate conversion based on the position information of the object in the first message, position information of the electronic device, and the first angle.

The electronic device obtains information such as an identifier of a corresponding vehicle, a vehicle position, a vehicle category, and a message sending time based on each first message in the first messages corresponding to the first image. For example, the camera learns, based on a BSM message of a vehicle 1, that a vehicle position of the vehicle 1 is a longitude $L_1$, a latitude $B_1$, and an altitude $H_1$, and a vehicle category thereof is a car. The camera learns, based on a BSM message of a vehicle 2, that a vehicle position of the vehicle 2 is a longitude $L_2$, a latitude $B_2$, and an altitude $H_2$, and a vehicle category thereof is a car. The camera learns, based on a BSM message of a vehicle 3, that a vehicle position of the vehicle 3 is a longitude $L_3$, a latitude $B_3$, and an altitude $H_3$, and a vehicle category thereof is a car. The camera learns, based on a BSM message of a vehicle 4, that a vehicle position of the vehicle 4 is a longitude $L_4$, a latitude $B_4$, and an altitude $H_4$, and a vehicle category thereof is a car. The camera learns, based on a BSM message of a vehicle 5, that a vehicle position of the vehicle 5 is a longitude $L_5$, a latitude $B_5$, and an altitude $H_5$, and a vehicle category thereof is a car.

In an implementation, the latitude, longitude, and altitude (B, L, H) in the vehicle position in the first message are converted into pixel coordinates $(x_v, y_v)$.

1. Convert the latitude, longitude, and altitude values of the vehicle position into coordinate values in a world coordinate system.

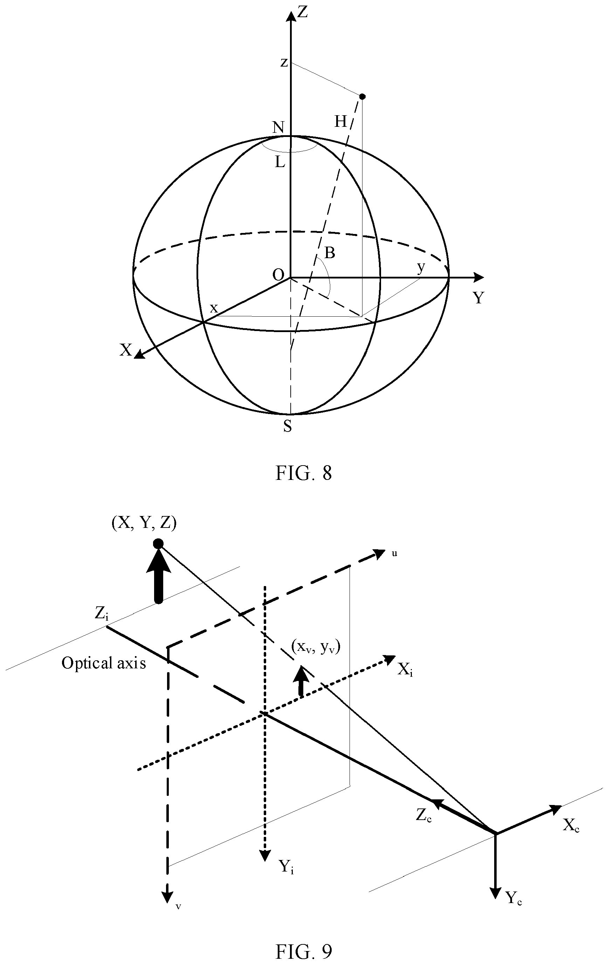

As shown in FIG. 8, the latitude, longitude, and altitude (B, L, H) are coordinate values in a local geodetic coordinate system. The latitude B is defined as an angle between a ground normal at a place and an equatorial plane. With the equatorial plane as a starting point, the latitude is negative to the south, and ranges from -90° to 0°; and the latitude is positive to the north, and ranges from 0° to 90°. For the longitude L, starting from the prime meridian, the longitude is positive to the east and negative to the west, and ranges from -180° to 180°. A distance from a point to an ellipsoidal plane along a normal is referred to as an altitude H of the point.

The world coordinate system uses an ellipsoid center O as the coordinate origin, uses an intersection line between the prime meridian and the equatorial plane as the X-axis, uses a direction orthogonal to the X-axis on the equatorial plane as the Y-axis, and uses a rotation axis of the ellipsoid as the Z-axis. The three directions are in a right-hand system.

The coordinate values (B, L, H) (B is the latitude, L is the longitude, and H is the altitude) in the local geodetic coordinate system are converted into coordinate values (x, y, z) in the world coordinate system based on the following formula ①:

$$x=(N+H)\cos B \cos L$$

$$y=(N+H)\cos B \sin L \qquad \qquad ①$$

$$z=(N(1-e^2)+H)\sin B$$

Herein, N is a prime vertical radius, and e is a first eccentricity of the earth. It is assumed that an equatorial radius of a reference ellipsoid is a and a polar radius of the reference ellipsoid is b. In definition of the reference ellipsoid, a is greater than b. In this case, $e^2=(a^2-b^2)/a^2$, and $N=a/(1-e^2\sin^2 B)^{1/2}$.

2. Convert the coordinate values in the world coordinate system into pixel coordinates in an image.

A camera has four coordinate systems: a world coordinate system, a camera coordinate system, an image coordinate system, and a pixel coordinate system. As shown in FIG. 9, a coordinate system $X_cY_cZ_c$ is the camera coordinate system. The camera coordinate system uses a camera light point as the origin, the X-axis and the Y-axis are parallel to two sides of an image, and the Z-axis overlaps an optical axis. A coordinate system $X_iY_iZ_i$ is the image coordinate system. The image coordinate system uses an intersection point of the optical axis and a projection plane as the origin, the X axis and the Y axis are parallel to two sides of an image, and the Z axis overlaps the optical axis. A coordinate system uv is the pixel coordinate system. The pixel coordinate system and the image coordinate system are on the same plane, and have different origins. In a direction from the camera light point to the projection plane, an upper left corner of the projection plane is the origin of the pixel coordinate system.

The coordinate values (x, y, z) in the world coordinate system are converted into the coordinate values $(x_v, y_v)$ in the pixel coordinate system based on the following formula ②:

$$s\begin{bmatrix} x_v \\ y_v \\ 1 \end{bmatrix} = \begin{bmatrix} f_x & 0 & c_x \\ 0 & f_x & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} x \\ y \\ z \\ 1 \end{bmatrix} \qquad ②$$

where a matrix $\begin{bmatrix} f_x & 0 & c_x \\ 0 & f_x & c_y \\ 0 & 0 & 1 \end{bmatrix}$ is an intrinsic camera parameter matrix, and is related to an intrinsic camera hardware parameter, a matrix $\begin{bmatrix} r_{11} & r_{12} & r_{13} & t_1 \\ r_{21} & r_{22} & r_{23} & t_2 \\ r_{31} & r_{32} & r_{33} & t_3 \end{bmatrix}$ is an extrinsic camera parameter matrix, and is related to a position (for example, a shooting angle of the camera, which may also be referred to as a first angle; and a position of the camera relative to the vehicle) of the world coordinate system relative to the pixel coordinate system, for example, a point in the world coordinate system is converted into a point in the pixel coordinate system through rotation by $\begin{bmatrix} r_{11} & r_{12} & r_{13} \\ r_{21} & r_{22} & r_{23} \\ r_{31} & r_{32} & r_{33} \end{bmatrix}$

and translation by $\begin{bmatrix} t_1 \\ t_2 \\ t_3 \end{bmatrix}$ , and s is a value of an object point in the Z-axis direction of the pixel coordinate system. For content of $r_{11}$-$r_{33}$ and $t_1$-$t_3$, refer to the related technology in the field. Details are not described herein again.

The pixel coordinates in the image that are obtained through conversion are the first position of the object in the first image.

In the foregoing implementation, an example in which the vehicle position in the first message is converted from the coordinate values (the longitude, the latitude, and the height) in the local geodetic coordinate system into the pixel coordinate values in the pixel coordinate system is used for description. It may be understood that, in some other implementations, the image position in the candidate box information may be converted from the pixel coordinate values in the pixel coordinate system into the coordinate values in the local geodetic coordinate system, and then compared with the vehicle position in the first message. This is not limited in this embodiment of this application.

S605: Determine, based on whether a difference between the first position and the position that is of the object in the image and that is in the candidate box information falls within a preset threshold, at least one first candidate box that is in the image and that is related to the object.

The candidate box of the first image is traversed, and if a first distance d between the first position $(x_v, y_v)$ and an image position $(x_p, y_p)$ in candidate box information of a candidate box is less than a preset distance threshold $d_{threshold}$ (for example, 0.5 meter), it is determined that the candidate box is the first candidate box corresponding to the first message, where d = $\sqrt{\left(x_p - x_v\right)^2 + \left(y_p - y_v\right)^2}$ .

S606: Adjust a parameter corresponding to the at least one first candidate box, where the parameter is related to the candidate box information.

In some embodiments, if d is less than $d_{threshold}$, it indicates that a probability that a vehicle corresponding to the candidate box and a vehicle sending the first message are a same vehicle is high, and a score of the candidate box corresponding to the first message is increased. In this way, a probability that the candidate box is determined as a detection box is increased, and a probability of missing detection is reduced.

In an implementation, a detection probability of the candidate box corresponding to the first message is increased based on the first distance d. For example, an adjusted detection probability $score_n$ of the candidate box corresponding to the first message is obtained based on the following formula ③, where an adjustment coefficient is $<p(d) = 2d/(d_{threshold} + d)$, $(1 - \varphi(d))$ is a confidence level of $score_n$, a smaller d indicates a higher confidence level, $score_{oral}$ is a detection probability value in the candidate box information, $score'$ is a specified detection probability adjustment threshold, and $score_{th} < score' < 1$:

$$score_n = score' \times \left(1 - \varphi(d)\right) + score_{oral} \times \varphi(d) \qquad ③$$

In some embodiments, if d is less than $d_{threshold}$, it indicates that a probability that a vehicle corresponding to the candidate box and a vehicle sending the first message are a same vehicle is high, and an intersection over union threshold $IoU_{th}$ corresponding to the candidate box in a process of determining the detection box from the plurality of candidate boxes by using the NMS algorithm is increased. In this way, a probability that the candidate box is deleted is reduced, that is, a probability that the candidate box is determined as a detection box is increased, and a probability of missing detection is reduced.

In an implementation, an intersection over union threshold corresponding to the candidate box corresponding to the first message is increased based on the first distance d. For example, the intersection over union threshold $IoU_{th}^n$ corresponding to the candidate box corresponding to the first message is obtained based on the following formula ④, where an adjustment coefficient is $<p(d) = 2d/(d_{threshold} + d)$, $(1 - \varphi(d))$ is a confidence level of $IoU_{th}^n$, a smaller d indicates a larger confidence level, $IoU_{th}^{oral}$ is a preset $IoU_{th}$ value in the NMS algorithm, $IoU_{th}'$ is a specified intersection over union threshold adjustment threshold, and $IoU_{th}^{oral} < IoU_{th}' < 1$:

$$IoU_{th}^n = IoU_{th}' \times \left(1 - \varphi(d)\right) + IoU_{th}^{oral} \times \varphi(d) \qquad ④$$

S607: Obtain one detection box of the object based on the detection probability and a specific algorithm, where candidate box information of the detection box is finally obtained information about the object.

In some embodiments, a candidate box with a detection probability (score) less than a detection probability threshold $score_{th}$ (for example, 0.85) is deleted, that is, it is determined that the candidate box with a detection probability less than the detection probability threshold is not a detection box.

For example, $score_{th}$ is set to 0.85, and detection probabilities of candidate boxes with sequence numbers 2, 4, and 7 in Table 1 are less than $score_{th}$. A first message is received, where a first distance between a vehicle position in the first message and an image position (192, 223) of the candidate box with the sequence number 7 is less than $d_{threshold}$, and the first message corresponds to the candidate box with the sequence number 7. $score'$ is set to 0.95. For example, as shown in Table 3, through calculation, $score_n$ of the candidate box with the sequence number 7 is 0.87, and a confidence level thereof is 0.5.

**Table 3**

| Sequence number | $x_{min}$ | $y_{min}$ | $x_{max}$ | $y_{max}$ | $x_p$ | $y_p$ | Score | Max IoU | $IoU_{th}^{n}$ | $score_n$ | Confidence level |
|---|---|---|---|---|---|---|---|---|---|---|---|
| 0 | 26 | 1 | 71 | 29 | 13.5 | 51 | 0.87 | 0.542 | 0.56 | | 0.6 |
| 1 | 34 | 3 | 83 | 35 | 18.5 | 59 | 0.91 | 0.542 | | | |
| 2 | 356 | 38 | 417 | 80 | 197 | 248.5 | 0.52 | 0.392 | | | |
| 3 | 377 | 30 | 435 | 74 | 203.5 | 254.5 | 0.95 | 0.392 | | | |
| 4 | 386 | 47 | 446 | 89 | 216.5 | 267.5 | 0.63 | 0.353 | | | |
| 5 | 354 | 19 | 398 | 49 | 186.5 | 223.5 | 0.86 | 0.501 | | | |
| 6 | 365 | 17 | 412 | 52 | 191 | 232 | 0.98 | 0.501 | | | |
| 7 | 380 | 4 | 416 | 30 | 192 | 223 | 0.76 | 0.192 | | 0.87 | 0.5 |

In this way, the candidate boxes with the sequence numbers 2 and 4 are deleted, and because $score_n$ of the candidate box of the sequence number 7 is greater than $score_{th}$, the candidate box of the sequence number 7 is retained, so that a probability of missing selection is retained. After screening is performed based on the detection probability, remaining candidate boxes are the candidate boxes with the sequence number 0, the sequence number 1, the sequence number 3, the sequence number 5, the sequence number 6, and the sequence number 7.

In some embodiments, the detection box is determined from the plurality of candidate boxes by using a specific algorithm, for example, a maximum suppression (non-maximum suppression, NMS) algorithm.

The NMS algorithm is described as follows:

1. Select an RoI with a largest score from a plurality of RoIs, denote the RoI as box_best, and retain the RoI.
2. Calculate an IoU between box_best and other RoIs.
3. If an IoU between a candidate box and box_best is greater than the intersection over union threshold $IoU_{th}$ (for example, 0.5), delete the candidate box. When an IoU between two candidate boxes is greater than $IoU_{th}$, a probability that the two candidate boxes represent a same detected object is high, a candidate box with a small score is deleted, and a candidate box with a large score is retained. In this way, a candidate box with a low score of a same detected object may be removed from a plurality of candidate boxes, and a candidate box with a high score of the same detected object may be determined as a detection box.
4. Select an RoI with a largest score from the remaining RoIs, and cyclically perform steps 1 to 3.

For example, the detection box is determined, based on the NMS algorithm, from the candidate boxes shown in Table 1. After screening is performed based on the detection probability, remaining candidate boxes are the candidate boxes with the sequence number 0, the sequence number 1, the sequence number 3, the sequence number 5, the sequence number 6, and the sequence number 7 in Table 1. The preset intersection over union threshold $IoU_{th}^{oral}$ is 0.5, and a maximum intersection over union max IoU between the candidate boxes with the sequence number 0 and the sequence number 1 is 0.542. Because a score value 0.91 of the sequence number 1 is greater than a score value 0.87 of the sequence number 0, and 0.542>0.5, the candidate box with the sequence number 0 and a lower score value is deleted. A first message is received, where a first distance between a vehicle position in the first message and an image position (13.5, 51) of the candidate box with the sequence number 0 is less than $d_{threshold}$, the first message corresponds to the candidate box with the sequence number 0, and a confidence level thereof $(1 - \varphi(d))$ is obtained as 0.6 through calculation based on $<p(d) = 2d/(d_{threshold} + d)$. For example, as shown in Table 3, $IoU_{th}'$ is set to 0.6, and an intersection over union threshold $IoU_{th}^{n}$ corresponding to the candidate box with the sequence number 0 is obtained as 0.56 through calculation based on the formula ④. Because 0.542<0.56, the candidate box with the sequence number 0 is not deleted. In this way, both the candidate boxes with the sequence number 0 and the sequence number 1 are retained. A maximum intersection over union max IoU between the candidate boxes with the sequence number 5 and the sequence number 6 is 0.501. Because a score value 0.98 of the sequence number 6 is greater than a score value 0.86 of the sequence number 5, and 0.501>0.5, the candidate box with the sequence number 5 and a lower score value is deleted. In this way, after screening is performed by using the NMS algorithm, remaining candidate boxes are the candidate boxes with the sequence number 0, the sequence number 1, the sequence number 3, the sequence number 6, and the sequence number 7 in Table 1. As shown in (b) in FIG. 7, the candidate boxes with the sequence number 0, the sequence number 1, the sequence number 3, the sequence number 6, and the sequence number 7 are determined as detection boxes.

In some embodiments, the electronic device further determines a vehicle category of the detected object based on the first distance d.

In an implementation, if d is less than $d_{threshold}$, it indicates a probability that a vehicle corresponding to the candidate box and a vehicle sending the first message are a same vehicle is high, and a vehicle category in the first message is determined as the vehicle category of the detected object. Because the vehicle category in the first message has high accuracy, object detection precision is improved.

For example, the vehicle category of the detected object is obtained based on the following formula ⑤, where an adjustment coefficient is $<p(d) = 2d/(d_{threshold} + d)$, $(1 - \varphi(d))$ is a confidence level of class, a smaller d indicates a higher confidence level, $class_{oral}$ is the vehicle category in the candidate box information, and class, is the vehicle category in the first message:

$$class = \left(1 - \varphi(d)\right) > \varphi(d) \ ? \ class_v : class_{oral} \qquad ⑤$$

In an example, when the vehicle category in the first message is inconsistent with the vehicle category of the candidate box corresponding to the first message, the vehicle category in the first message is determined as the vehicle category of the detection box. For example, if the vehicle category in the candidate box information of the candidate box with the sequence number 0 is an off-road vehicle, and the vehicle category in the first message corresponding to the candidate box with the sequence number 0 is a car, it is determined that the vehicle category of the detection box with the sequence number 0 is a car.

In an example, if the first message corresponding to the candidate box is not received, the vehicle category of the candidate box is determined as the vehicle category of the detection box. For example, if the vehicle category in the candidate box information of the candidate box with the sequence number 1 is a car, and the first message corresponding to the candidate box with the sequence number 1 is not received, it is determined that the vehicle category of the detection box with the sequence number 1 is a car.

In an example, when the vehicle category in the first message is consistent with the vehicle category of the candidate box corresponding to the first message, the vehicle category in the first message is determined as the vehicle category of the detection box. For example, if the vehicle category in the candidate box information of the candidate box with the sequence number 7 is a car, and the vehicle category in the first message corresponding to the candidate box with the sequence number 7 is a car, it is determined that the vehicle category of the detection box with the sequence number 7 is a car.

In the object detection method provided in this embodiment of this application, information such as a vehicle position and a vehicle category is obtained by using a V2X technology. A parameter in a process of determining a detected obj ect by using the obj ect detection algorithm is adjusted based on the obtained information such as the vehicle position and the vehicle category, so that information about a detection box determined from a candidate box is more accurate and has higher precision, and a probability of missing detection and incorrect detection in object detection is reduced.

It should be noted that the camera in embodiments of this application may be replaced with a camera lens, and the camera lens may be replaced with a camera.

It should be noted that all or some of embodiments of this application may be freely and randomly combined. The technical solutions obtained through combination also fall within the scope of this application.

It may be understood that, to implement the foregoing functions, the electronic device includes a hardware structure and/or software module to perform each corresponding function. A person of ordinary skill in the art should be aware that, in combination with the examples described in embodiments disclosed in this specification, units, algorithms, and steps can be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

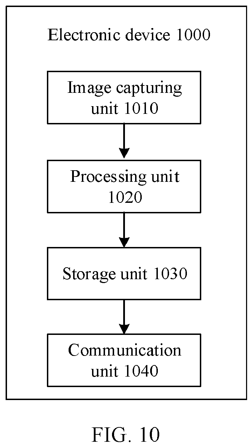

In an example, FIG. 10 is a schematic diagram of a possible structure of the electronic device in the foregoing embodiment. The electronic device 1000 includes an image capturing unit 1010, a processing unit 1020, a storage unit 1030, and a communication unit 1040.

The image capturing unit 1010 is configured to capture an image.

The processing unit 1020 is configured to control and manage an action of the electronic device 1000. For example, the processing unit 1020 may be configured to: perform object detection on an image by using an object detection algorithm, to obtain candidate box information; determine a candidate box corresponding to each first message; adjust a candidate box parameter based on a first distance between a vehicle position in the first message and an image position in candidate box information of a corresponding candidate box; determine a detection box from a plurality of candidate boxes based on an adjusted candidate box parameter; and/or perform another process of the technology described in this specification.

The storage unit 1030 is configured to store program code and data of the electronic device 1000. For example, the storage unit 1030 may be configured to store a received first message, or may be configured to store candidate box information.

The communication unit 1040 is configured to support the electronic device 1000 in communicating with another electronic device, for example, may be configured to receive the first message.

Certainly, unit modules in the electronic device 1000 include but are not limited to the image capturing unit 1010, the processing unit 1020, the storage unit 1030, and the communication unit 1040. For example, the electronic device 1000 may further include a power supply unit. The power supply unit is configured to supply power to the electronic device 1000.

The image capturing unit 1010 may be a camera sensor. The processing unit 1020 may be a processor or a controller, for example, may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The storage unit 1030 may be a memory. The communication unit 1040 may be a transceiver, a transceiver circuit, or the like.

For example, the image capturing unit 1010 is a camera sensor (the camera sensor 260 shown in FIG. 5), the processing unit 1020 is a processor (the processor 210 shown in FIG. 5), the storage unit 1030 may be a memory (the internal memory 221 shown in FIG. 5), and the communication unit 1040 may be referred to as a communication interface, including a wireless communication module (the wireless communication module 250 shown in FIG. 5). The electronic device 1000 provided in this embodiment of this application may be the electronic device 100 shown in FIG. 5. The camera sensor, the processor, the memory, the communication interface, and the like may be connected together, for example, connected by using a bus.

An embodiment of this application further provides a computer-readable storage medium. The computer-readable storage medium stores computer program code. When a processor executes the computer program code, an electronic device performs the method in the foregoing embodiments.

An embodiment of this application further provides a computer program product. When the computer program product runs on a computer, the computer is enabled to perform the method in the foregoing embodiments.

The electronic device 1000, the computer-readable storage medium, and the computer program product provided in embodiments of this application each are configured to perform the corresponding methods provided above. Therefore, for beneficial effects that can be achieved by the electronic device 1000, the computer-readable storage medium, and the computer program product, refer to the beneficial effects in the corresponding methods provided above. Details are not described herein again.

The foregoing descriptions about implementations allow a person skilled in the art to understand that, for the purpose of convenient and brief description, division into the foregoing functional modules is taken as an example for illustration. In actual application, the foregoing functions can be allocated to different modules and implemented according to a requirement, that is, an inner structure of an electronic device is divided into different functional modules to implement all or a part of the functions described above.

In the several embodiments provided in this application, it should be understood that the disclosed electronic device and method may be implemented in another manner. For example, the described electronic device embodiment is merely an example. For example, division into the modules or units is merely logical function division and may be other division in an actual implementation. For example, a plurality of units or components may be combined or integrated into another electronic device, or some features may be ignored or not performed. In addition, the displayed or discussed mutual couplings or direct couplings or communication connections may be implemented through some interfaces. The indirect couplings or communication connections between the electronic devices or units may be implemented in electronic, mechanical, or other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in the form of a software product. The software product is stored in a storage medium and includes several instructions for instructing a device (which may be a single-chip microcomputer, a chip, or the like) or a processor (processor) to perform all or a part of the steps of the methods described in embodiments of this application. The foregoing storage medium includes any medium that can store program code, such as a USB flash drive, a removable hard disk, a ROM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An object detection method, applied to an electronic device comprising a camera device, wherein the electronic device is fixedly disposed, the electronic device communicates with a mobile device in a wireless manner, a distance between the mobile device and the electronic device falls within a specific range, the mobile device is located on an object, and the method comprises:

obtaining, by the electronic device, an image through photo taking or video shooting at a first angle by using the camera device, wherein the image comprises at least one object;

recognizing the object comprised in the image, and obtaining one or more candidate boxes of each object in the object and one piece of candidate box information corresponding to each candidate box, wherein the candidate box information comprises a position of the object in the image, a detection probability of the object, a first object category of the object, and a maximum intersection over union max IoU between the candidate box and another candidate box that overlaps the candidate box;

receiving a first message from the mobile device within preset duration before or after the image is obtained, wherein the first message comprises position information of the object and a second object category of the object;

determining, from the one or more candidate boxes based on the position information of the object, position information of the electronic device, the first angle, and the position of the object in the image, at least one first candidate box corresponding to the first message;

obtaining, from the at least one first candidate box, one or more second candidate boxes with a detection probability greater than or equal to a preset detection probability threshold; and

obtaining one detection box of the object from the one or more second candidate boxes by using a maximum suppression NMS algorithm, wherein candidate box information corresponding to the detection box is information that discloses the object, wherein

the first object category and the second object category are based on a same category classification standard.

2. The method according to claim 1, wherein the object comprises at least one of the following: a vehicle and a person, and the position information comprises position coordinates.

3. An object detection method, applied to an electronic device comprising a camera device, wherein the electronic device is fixedly disposed, the electronic device communicates with a mobile device in a wireless manner, a distance between the mobile device and the electronic device falls within a specific range, the mobile device is located on an object, and the method comprises:

obtaining, by the electronic device, an image through photo taking or video shooting at a first angle by using the camera device, wherein the image comprises at least one object;

recognizing the object comprised in the image, and obtaining one or more candidate boxes of each object in the object and one piece of candidate box information corresponding to each candidate box, wherein the candidate box information comprises a position of the object in the image, a detection probability of the object, a first object category of the object, and a maximum intersection over union max IoU between the candidate box and another candidate box that overlaps the candidate box;

receiving a first message from the mobile device within preset duration before or after the image is obtained, wherein the first message comprises position information of the object and a second object category of the object;

determining, from the one or more candidate boxes based on the position information of the object, position information of the electronic device, the first angle, and the position of the object in the image, at least one first candidate box corresponding to the first message;

adjusting a parameter corresponding to the at least one first candidate box, wherein the parameter is related to the candidate box information;

obtaining, from the at least one first candidate box and a candidate box other than the first candidate box, one or more second candidate boxes with a detection probability greater than or equal to a preset detection probability threshold; and

obtaining one detection box of the object from the one or more second candidate boxes by using a maximum suppression NMS algorithm, wherein candidate box information corresponding to the detection box is information that discloses the object, wherein

the first object category and the second object category are based on a same category classification standard.

4. The method according to claim 3, wherein the object comprises at least one of the following: a vehicle and a person, and the position information comprises position coordinates.

5. The method according to claim 4, wherein the adjusting a parameter corresponding to the at least one first candidate box comprises: increasing a value of a detection probability corresponding to each first candidate box.

6. The method according to any one of claims 3 to 5, wherein the obtaining one or more second candidate boxes with a detection probability greater than or equal to a preset detection probability threshold comprises: deleting or excluding a first candidate box with a detection probability less than the preset detection probability threshold, to obtain the one or more second candidate boxes.

7. The method according to claim 5, wherein the increasing a value of a detection probability corresponding to each first candidate box comprises:

enabling an increased detection probability to be equal to $score' \times (1 - \varphi(d)) + score_{oral} \times \varphi(d)$, wherein $<p(d) = 2d/(d_{threshold} + d)$, d represents a distance between the position of the object in the image and a first position that is in the image and into which the position information in the first message is converted through coordinate conversion, $d_{threshold}$ represents a preset distance threshold, $score_{oral}$ represents a value of a detection probability corresponding to one first candidate box, $score'$ represents a specified detection probability adjustment threshold, and detection probability threshold$<score' < 1$.

8. The method according to any one of claims 3 to 7, wherein the adjusting a parameter corresponding to the at least one first candidate box comprises: increasing an intersection over union threshold corresponding to the first candidate box.

9. The method according to claim 8, wherein the increasing an intersection over union threshold corresponding to the first candidate box comprises:

enabling an increased intersection over union threshold corresponding to the first candidate box to be equal to

$$IoU'_{th} \times \left(1 - \varphi(d)\right) + IoU^{oral}_{th} \times \varphi(d)$$
, wherein

$<p(d) = 2d/(d_{threshold} + d)$, d represents a distance between the position of the object in the image and a first position that is in the image and into which the position information in the first message is converted through coordinate conversion, $d_{threshold}$ represents a preset distance threshold, $IoU^{oral}_{th}$ represents a preset intersection over union threshold in the NMS algorithm, $IoU'_{th}$ represents a specified intersection over union threshold adjustment threshold, and $IoU^{oral}_{th} < IoU'_{th} < 1$.

10. The method according to claim 8 or 9, wherein the obtaining one detection box of the object from the one or more second candidate boxes by using a maximum suppression NMS algorithm comprises:
if a max IoU in candidate box information of one second candidate box is less than the increased intersection over union threshold corresponding to the first candidate box, by using the NMS algorithm, stopping deleting or excluding the second candidate box from the candidate box, and determining the second candidate box as the detection box of the object.

11. The method according to any one of claims 3 to 10, wherein the method further comprises:
determining the second object category of the object in the first message as an object category of the detection box if the second object category of the object in the first message is inconsistent with the first object category of the object in the candidate box information of the first candidate box.

12. The method according to claim 11, wherein whether the second object category of the object in the first message is consistent or inconsistent with the first object category of the object in the candidate box information of the first candidate box is determined by using the following formula:

object category of the detection box=$(1 - \varphi(d)) > \varphi(d)$? $class_v$:$class_{oral}$, wherein $<p(d) = 2d/(d_{threshold} + d)$, d represents a distance between the position of the object in the image and a first position that is in the image and into which the position information in the first message is converted through coordinate conversion, $d_{threshold}$ represents a preset distance threshold, *class,* represents the second object category of the object in the first message, and *class$_{oral}$* represents the first object category of the object in the candidate box information of the first candidate box.

13. The method according to any one of claims 1 to 12, wherein the determining, from the one or more candidate boxes based on the position information of the object, position information of the electronic device, the first angle, and the position of the object in the image, at least one first candidate box corresponding to the first message comprises:

traversing all candidate box information corresponding to the object, comparing the preset distance threshold with D obtained through conversion based on the candidate box information, and determining, as the first candidate box, a candidate box with D less than the preset distance threshold, wherein
D represents a distance between the position of the object in the image and a first position that is in the image and into which the position information of the object is converted through coordinate conversion based on the position information of the electronic device and the first angle.

14. The method according to any one of claims 1 to 13, wherein the recognizing the object comprised in the image comprises: recognizing, by using a YOLO algorithm or a Fast_RCNN algorithm, the object comprised in the image.

15. An electronic device, wherein the electronic device comprises:

a processor;
a memory; and
a computer program, wherein the computer program is stored in the memory, and when the computer program is executed by the processor, the electronic device is enabled to perform the method according to any one of claims 1 to 14.

16. A computer-readable storage medium, wherein the computer-readable storage medium comprises a computer program, and when the computer program runs on an electronic device, the electronic device is enabled to perform the method according to any one of claims 1 to 14.

FIG. 1

FIG. 2

FIG. 3

FIG. 4

Electronic device
100

Antenna

FIG. 5

S601: Periodically capture an image at a first angle based on a period with first duration, and each time after an image is captured, recognize the image by using an object detection algorithm, to obtain one or more candidate boxes of each object in the image and candidate box information corresponding to each candidate box

S602: Receive a first message from a mobile device of the object, where the first message includes position information, category information, and the like of the object

S603: Determine, based on whether a difference between a receiving time of the first message and a capturing time of the image falls within preset duration, a first image corresponding to the first message

S604: Obtain a first position of the object in the first image through coordinate conversion based on the position information of the object in the first message, position information of the electronic device, and the first angle

S605: Determine, based on whether a difference between the first position and the position that is of the object in the image and that is in the candidate box information falls within a preset threshold, at least one first candidate box that is in the image and that is related to the object

S606: Adjust a parameter corresponding to the at least one first candidate box, where the parameter is related to the candidate box information

S607: Obtain one detection box of the object based on a detection probability and a specific algorithm, where candidate box information of the detection box is finally obtained information about the object

FIG. 6

(a)

(b)

FIG. 7

FIG. 8

FIG. 9

Electronic device 1000

Image capturing
unit 1010

↓

Processing unit
1020

↓

Storage unit 1030

↓

Communication
unit 1040

FIG. 10

## INTERNATIONAL SEARCH REPORT

| International application No. |
|---|
| **PCT/CN2022/070160** |

### A. CLASSIFICATION OF SUBJECT MATTER

G06K 9/00(2022.01)i; G06K 9/62(2022.01)i

According to International Patent Classification (IPC) or to both national classification and IPC

### B. FIELDS SEARCHED

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 车辆, 汽车, 检测, 摄像, 角度, 候选, 框, 分类, 类别, 概率, 重叠, 交并比, 抑制, 位置, 路侧单元, 板载单元, 车用无线通信, vehicle, car, detection, image, angle, candidate, box, classification, probability, overlap, IOU, restrain, location, RSU, OBU, V2X

### C. DOCUMENTS CONSIDERED TO BE RELEVANT

| Category* | Citation of document, with indication, where appropriate, of the relevant passages | Relevant to claim No. |
|---|---|---|
| A | CN 108960266 A (ALIBABA GROUP HOLDING LIMITED) 07 December 2018 (2018-12-07)<br>  description, paragraphs 0087-0095 | 1-16 |
| A | CN 112183206 A (INSTITUTE OF SOFTWARE APPLICATION TECH GUANGZHOU & CHINESE ACADEMY OF SCIENCES) 05 January 2021 (2021-01-05)<br>  entire document | 1-16 |
| A | CN 109308516 A (HUAWEI TECHNOLOGIES CO., LTD.) 05 February 2019 (2019-02-05)<br>  entire document | 1-16 |
| A | CN 111787481 A (BEIHANG UNIVERSITY) 16 October 2020 (2020-10-16)<br>  entire document | 1-16 |
| A | US 2020028736 A1 (LG ELECTRONICS INC.) 23 January 2020 (2020-01-23)<br>  entire document | 1-16 |
| A | US 2019130189 A1 (QUALCOMM INC.) 02 May 2019 (2019-05-02)<br>  entire document | 1-16 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **11 March 2022** | **01 April 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/070160**

| Patent document cited in search report | | | Publication date (day/month/year) | Patent family member(s) | | | Publication date (day/month/year) |
|---|---|---|---|---|---|---|---|
| CN | 108960266 | A | 07 December 2018 | None | | | |
| CN | 112183206 | A | 05 January 2021 | None | | | |
| CN | 109308516 | A | 05 February 2019 | None | | | |
| CN | 111787481 | A | 16 October 2020 | None | | | |
| US | 2020028736 | A1 | 23 January 2020 | KR | 20190106847 | A | 18 September 2019 |
| US | 2019130189 | A1 | 02 May 2019 | None | | | |

Form PCT/ISA/210 (patent family annex) (January 2015)

**REFERENCES CITED IN THE DESCRIPTION**

**Patent documents cited in the description**

- CN 202110221889